# EUROPÄISCHE PATENTSCHRIFT

(11) **EP 1 524 786 B1**
(45) Veröffentlichungstag und Bekanntmachung des Hinweises auf die Patenterteilung: **10.09.2008**
(21) Anmeldenummer: 04077681.7
(22) Anmeldetag: 28.09.2004
(51) Int. Cl.: H04B 10/24, G02B 6/00

(54) **Optoelektronischer Transceiver für eine bidirektionale optische Signalübertragung**
Optoelectronic transceiver for bidirectional optical transmission
Emetteur-recepteur optoelectronique pour la transmission optique bidirectionelle

(30) Priorität: 15.10.2003 DE 10348675; 30.01.2004 US 769287
(43) Veröffentlichungstag der Anmeldung: 20.04.2005
(73) Patentinhaber: Finisar Corporation, Sunnyvale, CA 94089 (US)
(72) Erfinder: Weigert, Martin, 93152 Hardt (DE)
(74) Vertreter: Müller, Wolfram Hubertus

(56) Entgegenhaltungen:
- DE-A1- 4 444 470
- DE-A1- 10 064 599
- GB-A- 2 378 068
- US-B1- 6 215 917

## Beschreibung

Die Erfindung betrifft einen optoelektronischen Transceiver für eine bidirektionale optische Signalübertragung.

### Hintergrund der Erfindung

Es sind als Industrie-Standard sogenannte Small-Form-Factor-(SFF)-Transceiver und Small-Form-Factor-Pluggable (SFP)-Transceiver kleiner Bauart bekannt, die in einem Gehäuse angeordnet sind. Die Transceiver können dabei steckbar ausgebildet (SFP Transceiver) oder fest mit einem Gehäuse verbunden sein (SFF Transceiver). Die bekannten Transceiver weisen neben einem optoelektronischen Sendebaustein und einem optoelektronischen Empfangsbaustein eine interne, parallel zur optischen Achse des Transceivers verlaufende Leiterplatte auf, die elektronische Schaltungen für die Wandlerbausteine enthält wie einen Treiberbaustein und/oder einen Vorverstärker-Baustein. Der Transceiver ist auf einer Hauptschaltungsplatine angeordnet, die beispielsweise über einen Stecker elektrisch mit einer elektrischen Schnittstelle der internen Leiterplatte verbunden ist. Ein SFP-Transceiver ist beispielsweise in der DE 101 14 143 A1 beschrieben.

In der EP-A-0 463 214 ist ein als BIDI-Modul bekanntes Sendeund Empfangsmodul für eine bidirektionale optische Signalübertragung beschrieben. Bei diesem Modul sind die beiden aktiven Bauelemente, nämlich Lichtsender und Lichtempfänger als eigenständige Bauelemente hermetisch dicht abgekapselt in einem gemeinsamen Modulgehäuse eingebaut, in dessen Inneren ein Strahlteiler und eine Linsenkoppeloptik angeordnet sind. Das Modulgehäuse weist einen Faseranschluss für eine gemeinsame Lichtleitfaser auf. Durch den Sender wird ein optisches Signal in die angekoppelte Glasfaser eingekoppelt, während gleichzeitig ein anderes optisches Signal aus derselben Faser empfangen werden kann. Die Trennung der beiden Signale geschieht durch einen Strahlteiler, der auch einen wellenlängenselektiven Filter enthalten kann, der eine bestimmte Wellenlänge reflektiert und eine andere Wellenlänge durchlässt.

Aus der WO 02/095470 A1 ist ein elektro-optisches Modul zum Senden und/oder Empfangen optischer Signale mindestens zweier optischer Datenkanäle bekannt, bei dem mindestens zwei Lichtwellenleiterabschnitte mit jeweils mindestens einer angeschrägten Stirnfläche vorgesehen sind. Die Lichtwellenleiterabschnitte sind an den angeschrägten Stirnflächen axial hintereinander positioniert. Für einen bestimmten optischen Kanal erfolgt eine Lichteinkopplung bzw. Lichtauskopplung an der angeschrägten Stirnfläche eines Lichtwellenleiterabschnitts unter einem Winkel zur optischen Achse des Lichtwellenleiters. Die Stirnfläche ist dabei zur Wellenlängentrennung mit einem wellenlängenselektiven Filter beschichtet.

Aus der WO 02/084 358 ist ein Sendemodul für eine optische Signalübertragung bekannt, bei der eine Sendeeinrichtung auf einem Sendeeinrichtungs-Substrat und eine Detektionseinrichtung auf einem Detektionseinrichtungs-Substrat angeordnet und das Sendeeinrichtungs-Substrat und das Detektionseinrichtungs-Substrat in Bezug auf die Richtung des ausgesandten bzw. empfangenen Lichts übereinander angeordnet sind. Das Sendeeinrichtungs-Substrat und/oder das Detektionseinrichtungs-Substrat sind dabei für die von der Sendeeinrichtung ausgesandte Wellenlänge transparent. Das bekannte Sendemodul stellt einen vorteilhaften Aufbau mit allerdings nur einer Detektionseinrichtung bereit.

Darüber hinaus ist aus der DE 44 44 470 A1 eine Transceiveranordnung bekannt, die zwei komplementär ausgebildete Tranceiver mit jeweils einem Sendelaser und einer Empfangsdiode aufweist, wobei die Empfangswellenlänge eines Tranceivers auf die Sendewellenlänge des jeweils anderen Transceiver abgestimmt ist

Es ist anzustreben, Transceiver kleiner Bauart für eine bidirektionale optische Datenübertragung bereitzustellen, die eine hohe Datenrate realisieren können und gleichzeitig kostengünstig herstellbar sind.

### Zusammenfassung der Erfindung

Die erfindungsgemäße Lösung zeichnet sich durch den Gedanken aus, in einem Gehäuse kleiner Bauart mit einer Breite von maximal 13,5 mm zwei bidirektionale optische Unterbaugruppen anzuordnen, die beide zum gleichzeitigen Aussenden und Empfang optischer Signale geeignet sind. Über eine optische Schnittstelle zur Ankopplung zweier Lichtwellenleiter ist jede Unterbaugruppe jeweils mit einem Lichtwellenleiter optisch koppelbar.

Jede optische Unterbaugruppe enthält sowohl einen optischen Sender als auch einen optischen Empfänger. Sie wird auch als BOSA (bidirectional optical subassembly) bezeichnet. Anders als in bekannten Transceivern wird somit bei der vorliegenden Erfindung jede Unterbaugruppe als bidirektionales Sende- und Empfangsmodul ausgebildet. Damit können in einem optischen Link zwischen zwei Transceivern auf einem Lichtwellenleiter gleichzeitig optische Signale in beiden Richtungen übertragen, wobei jede Übertragungsrichtung mit einer anderen Wellenlänge arbeitet. Hierdurch lässt sich die Übertragungskapazität eines optischen Link und damit die Kapazität bestehender Glasfasernetze erhöhen. Gleichzeitig werden optische Unterbaugruppen kleiner Bauart verwendet, so dass ihre Integration in ein Gehäuse kleiner Bauart, insbesondere gemäß dem SSF- oder SSP-Industriestandard möglich ist.

In einer bevorzugten Ausgestaltung der Erfindung weist der Transceiver zusätzlich einen Multiplexer und einen Demultiplexer auf. Diese sind bevorzugt mit in das Transceivergehäuse integriert, können jedoch grundsätzlich auch gesondert angeordnet sein. Der Demultiplexer teilt einen durch den Transceiver zu übertragenden elektrischen Datenstrom einer vorgegebenen Bandbreite in einen ersten und einen zweiten zu übertragenden Teildatenstrom jeweils einer geringeren Bandbreite auf. Der erste zu übertragende Teildatenstrom wird der ersten Unterbaugruppe und der zweite zu übertragende Teildatenstrom wird der zweiten Unterbaugruppe zugeführt. Die ersten und zweiten zu übertragenden Teildatenströme werden dann über die erste und zweite Unterbaugruppe als optische Signale ausgesandt. Gleichzeitig zu dem Aussenden optischer Signale empfangen die erste Unterbaugruppe und die zweite Unterbaugruppe einen ersten zu empfangenden optischen Teildatenstrom und einen zweiten zu empfangenden optischen Teildatenstrom jeweils einer bestimmten Bandbreite, wandeln diese in elektrische Signale um und führen die elektrischen Signale dem Multiplexer zu, der die beiden empfangenen Teildatenströme zu einem emfangenen elektrischen Datenstrom einer vorgegebenen, höheren Bandbreite zusammensetzt. Bevorzugt ist dabei der Demultiplexer ein 1:2 Demultiplexer und der Multiplexer ein 2:1 Multiplexer, wobei die vorgegebene Bandbreiten des zu übertragenden und des empfangenen Datensignals identisch sind.

Die Verwendung eines Multiplexers und eines Demultiplexers in der beschriebenen Weise ermöglicht, bei gleicher Datenrate der einzelnen Subbaugruppen die Übertragungskapazität des Transceivers insgesamt zu verdoppeln. Dabei werden beide Unterbaugruppen gleichzeitig bidirektional betrieben. Auf einer Faser können somit genau soviel Daten transportiert werden wie bei bisherigen Transceivern auf zwei Fasern. Die Kapazität bestehender Fasernetze kann dementsprechend verdoppelt werden. Die Erhöhung der Übertragungskapazität erfordert dabei mit Vorteil nicht, die äußere Beschaltung und das elektrische Interface des Transceivers zu ändern. Diese können beibehalten werden. Auch kann in den Subbaugruppen auf jeweils kostengünstig verfügbare Komponenten wie vertikal emittierende Laserdioden (VCSEL), kantenemittierende Laser und Pindioden zurückgegriffen werden.

In einer bevorzugten Ausführungsform der Erfindung weist die erste Unterbaugruppe folgende Komponenten auf: ein Sendebauelement, das Licht einer ersten Wellenlänge aussendet; ein Empfangsbauelement, das Licht einer zweiten Wellenlänge detektiert; ein für das Licht der ersten Wellenlänge transparenten Trägersubstrat, auf dem das Sendebauelement angeordnet ist; und ein Monitorbauelement, das einen Bruchteil des vom Sendebauelement ausgestrahlten Lichts detektiert; wobei das Empfangsbauelement in das Trägersubstrat integriert ist; das Empfangsbauelement und das Sendebauelement in Bezug auf die Richtung des ausgesandten bzw. empfangenen Lichts hintereinander angeordnet sind; das Empfangsbauelement für das Licht der ersten Wellenlänge optisch transparent ist; und vom Sendebauelement ausgesandtes Licht das Trägersubstrat und das Empfangsbauelement durchstrahlt.

In einer bevorzugten Ausführungsform der Erfindung weist die zweite Unterbaugruppe folgende Komponenten auf: ein Sendebauelement, das Licht einer zweiten Wellenlänge aussendet; ein Empfangsbauelement, das Licht einer ersten Wellenlänge detektiert; ein für das Licht der ersten Wellenlänge und der zweiten Wellenlänge transparentes Trägersubstrat, auf dem das Sendebauelement angeordnet ist; und ein Monitorbauelement, das einen Bruchteil des vom Sendebauelement ausgestrahlten Lichts detektiert; wobei das Empfangsbauelement und das Sendebauelement in Bezug auf die Richtung des ausgesandten bzw. empfangenen Lichts hintereinander angeordnet sind; das Sendebauelement für das Licht der ersten Wellenlänge optisch transparent ist; vom Sendebauelement ausgesandtes Licht das Trägersubstrat durchstrahlt; und das vom Empfangsbauelement empfangene Licht das Trägersubstrat und das Sendebauelement durchstrahlt.

Die beiden Unterbaugruppen sind dazu geeignet, untereinander über einen optischen Link gleichzeitig in beiden Richtungen Daten zu übertragen, wobei das von der einen Unterbaugruppe ausgesandte Licht jeweils von der anderen Unterbaugruppe empfangen wird.

Es wird dabei für beide Unterbaugruppen eine Anordnung verwendet, bei der das Sendebauelement und Empfangsbauelement in Bezug auf die Richtung des ausgesandten bzw. empfangenen Lichtes hintereinander angeordnet sind, so dass eine Strahlumlenkung nicht erforderlich ist. Hierdurch vereinfacht sich der Aufbau erheblich. Des Weiteren ist ein Filter zur Wellenlängenseparation nicht zwingend erforderlich. Dabei wird von dem Umstand Gebrauch gemacht, dass die verwendeten Materialien für das Trägersubstrat, das Sendebauelement und das Empfangsbauelement für bestimmte Wellenlängen transparent, für andere Wellenlängen dagegen nicht transparent sind. Insbesondere nutzt diese Ausgestaltung den Effekt, dass langwelligeres Licht beispielsweise einer Wellenlänge von 1310 nm durch Substrate, die kurzwelligeres Licht von beispielsweise 850 nm erzeugen, hindurchstrahlen kann.

Es wird jeweils ein kompakter Aufbau einer bidirektionalen Unterbaugruppe mit reduzierter Teilezahl und damit geringen Herstellungskosten zur Verfügung gestellt, wobei die Unterbaugruppe gleichzeitig ein Montoring des Lichts des Sendebauelements erlaubt. Die derart aufgebaute bidirektionale Unterbaugruppe ist darüberhinaus in kleiner Bauweise ausführbar und kann in ein Transceivergehäuse kleiner Bauart integriert werden.

Die Wellenlängen des Sendebauelementes und des Empfangsbauelementes sind bevorzugt so gewählt, dass sie den in der optischen Übertragungstechnik üblichen Wellenlängen, somit insbesondere den optischen "Fenstern" üblicher Glasfasern entsprechen. Bevorzugt werden für die erste und zweite Wellenlänge Wellenlängenkombinationen von 850 nm/1310 nm, 850 nm/1490 nm oder 850 nm/1550 nm gewählt. Ebenfalls möglich ist eine Kombination für die erste und zweite Wellenlänge von 1310 nm/1550 nm.

Der erfindungsgemäße Transceiver ist jedoch auch in Kombination mit anders ausgeführten optischen Unterbaugruppen ausführbar. In einem anderen Ausführungsbeispiel weist eine Unterbaugruppe auf: ein Sende-Mikromodul, das auf einem ersten Trägerelement ein Laserbauelement, das Licht einer ersten Wellenlänge emittiert, aufweist; ein Empfangs-Mikromodul, das auf einem zweiten Trägerelement eine Fotodiode aufweist, die Licht einer zweiten Wellenlänge detektiert; und ein TO-Gehäuse mit einer Bodenplatte, die der Anordnung der Sende-Mikromoduls und des Empfangs-Mikromoduls dient. Dabei sind das Sende-Mikromodul und das Empfangs-Mikromodul in Bezug auf das emittierte bzw. zu detektierende Licht übereinander angeordnet und ist das erste Trägerelement des Sende-Mikromoduls für das zu detektierende Licht transparent. In einer bevorzugten Ausführungsvariante weist die Bodenplatte des TO-Gehäuses dabei eine Aussparung auf, die der Aufnahme des Empfangs-Mikromoduls dient, wobei das Sende-Mikromodul hierüber auf der Bodenplatte angeordnet ist.

Die andere Unterbaugruppe des Transceivers ist bis auf den Umstand, dass die jeweils andere Wellenlänge emittiert und detektiert wird, identisch ausgebildet.

Diese Ausführungsform der Unterbaugruppen greift auf kostengünstige Aufbauformen unter Verwendung eines TO-Gehäuses zurück. Dabei können kantenemittierende Laserdioden eingesetzt werden. Die Unterbaugruppe ist wiederum in kleiner Bauweise ausgeführt und kann in ein Transceivergehäuse kleiner Bauart integriert werden.

### Kurze Beschreibung der Zeichnungen

Die Erfindung wird nachfolgend unter Bezugnahme auf die Figuren anhand mehrerer Ausführungsbeispiele näher erläutert.
Es zeigen:
- Figur 1 -: eine schematische Darstellung des Aufbaus zweier einander komplementärer optischer Subbaugruppen für die bidirektionale Datenübertragung,
- Figur 2 -: den Aufbau einer ersten Subbaugruppe für eine bidirektionale Datenübertragung, die Licht einer ersten Wellenlänge aussendet und Licht einer zweiten Wellenlänge empfängt,
- Figur 3 -: den Aufbau einer zweiten Subbaugruppe für eine bidirektionale Datenübertragung, die Licht der zweiten Wellenlänge aussendet und Licht der ersten Wellenlänge empfängt,
- Figur 4 -: einen Schnitt durch ein Gehäuse mit einer Subbaugruppe gemäß den Figuren 2 oder 3,
- Figur 5 -: eine perspektivische Ansicht der Subbaugruppe der Figur 4, die mit einer Steckeraufnahme verbunden und über eine Flexfolie kontaktiert ist,
- Figur 6 -: in perspektivischer Darstellung einen optoelektronischen Transceiver mit einem Gehäuse und zwei Subbaugruppen gemäß Figur 5 oder gemäß Figur 8a,
- Figur 7 -: eine alternative Ausgestaltung der Subbaugruppe der Figur 3,
- Figur 8a -: in Explosionsdarstellung den Aufbau eines weiteren Ausführungsbeispiels einer Subbaugruppe für einen Transceiver gemäß Figur 6,
- Figur 8b -: eine Detailansicht der Subbaugruppe der Figur 8a, die die Anordnung eines Mikro-Sendemoduls und eines Mikro-Empfangsmoduls auf der Bodenplatte eines TO-Gehäuses darstellt, und
- Figur 9: ein Blockdiagramm der funktionalen Komponenten des Transceivers des Figur 6.

### Beschreibung mehrerer bevorzugten Ausführungsbeispiels

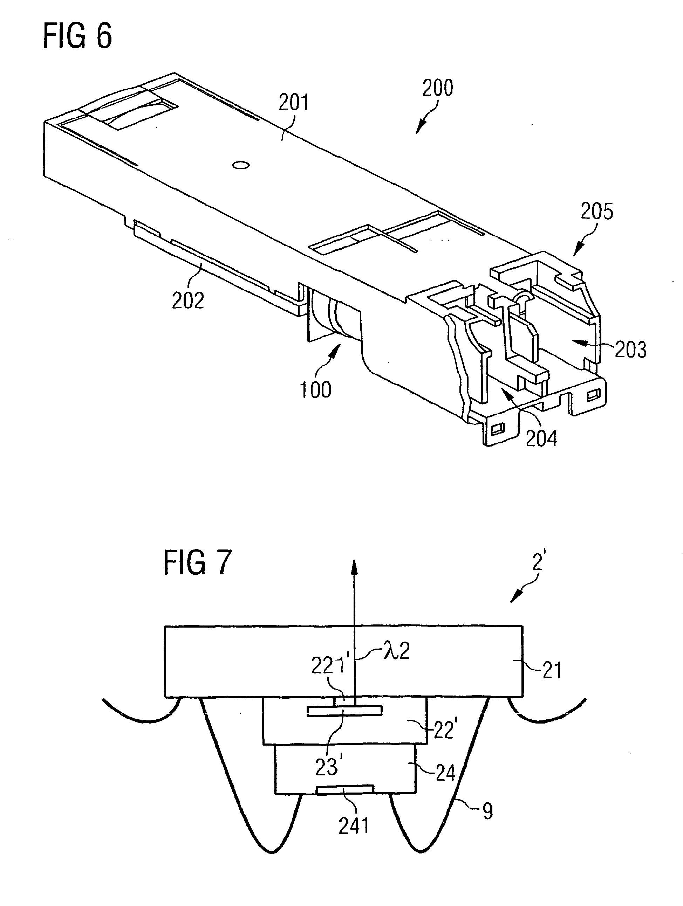

Die Figur 6 zeigt einen optoelektronischen Transceivers 200 kleiner Bauart gemäß dem Industrie-Standard SFP. Der Transceiver 200 weist ein längliches Gehäuse 201 mit einer Breite kleiner als 13,5 mm auf. Der Transceiver 200 enthält in dem Gehäuse 201 zwei nebeneinander angeordnete bidirektionale optische Unterbaugruppen (BOSAs) 100, von denen eine dargestellt ist. Eine optische Schnittstelle wird durch einen Steckerbereich 205 mit zwei optischen Ports 203, 204 bereitgestellt. In jeden optischen Port 203, 204 ist ein Lichtwellenleiter einsteckbar, wobei eine optische Kopplung zwischen dem Lichtwellenleiter und der jeweiligen Unterbaugruppe 100 erfolgt, so dass jede Unterbaugruppe 100 über einen angeschlossenen Lichtwellenleiter optische Signale aussenden und empfangen kann.

Die beiden Unterbaugruppen 100 sind beispielsweise über einen Flexleiter elektrisch mit einer internen Leiterplatte 202 des Transceivers 200 verbunden, die in üblicher Weise elektrische Komponenten wie etwa einen Treiberbaustein aufweist. Die Leiterplatte 202 ist über eine elektrische Schnittstelle (nicht dargestellt) mit einer Hauptschaltungsplatine verbindbar. Dabei ist denkbar, dass auf die interne Leiterplatte 202 des Transceivers verzichtet wird und die entsprechenden elektrischen Komponenten zusätzlich in die Unterbaugruppen 100 integriert sind.

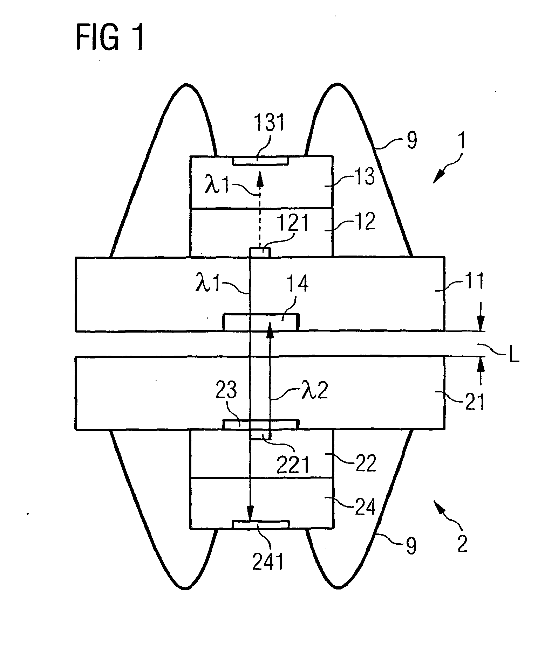

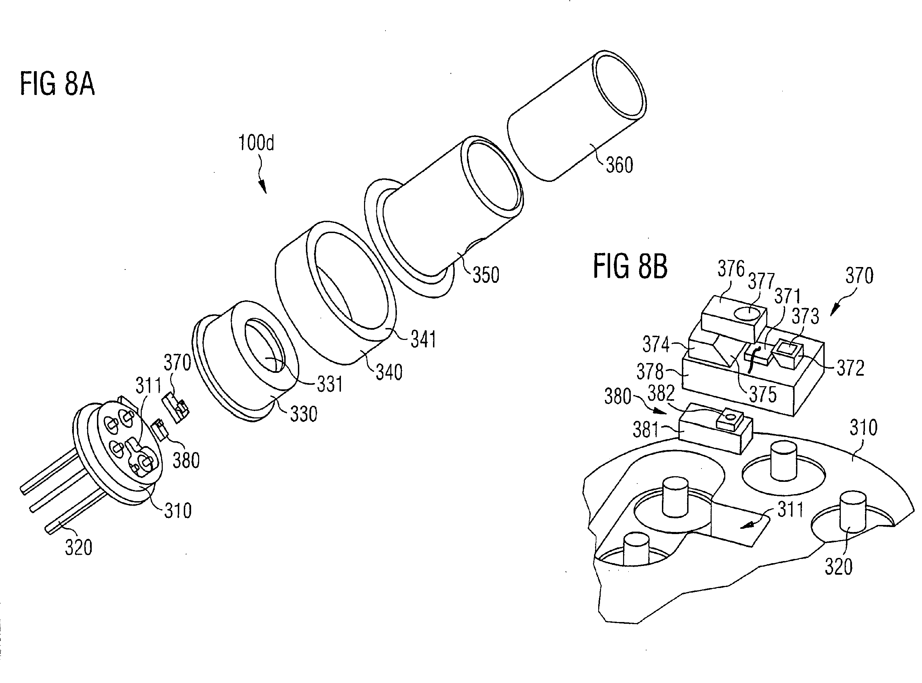

Es wird darauf hingewiesen, dass beide Unterbaugruppen 100 als bidirektionale Module ausgebildet sind, der Transceiver 200 also gleichzeitig auf jedem Port Licht einer Wellenlänge aussenden und Licht einer anderen Wellenlänge empfangen kann. Die Unterbaugruppen 100 sind in kleiner Bauweise ausgeführt, so dass sie nebeneinander in die vorhandene Gehäusebreite von 13,5 mm passen, wobei in der Regel zusätzlich ein Mindestabstand zwischen den Subbaugruppen 100 eingehalten werden muss. Ausführungsbeispiele für die Ausgestaltung der Unterbaugruppen 100 kleiner Bauweise sind nachfolgend zum einen in den Figuren 1 bis 5 und zum anderen in den Figuren 8a, 8b beschrieben.

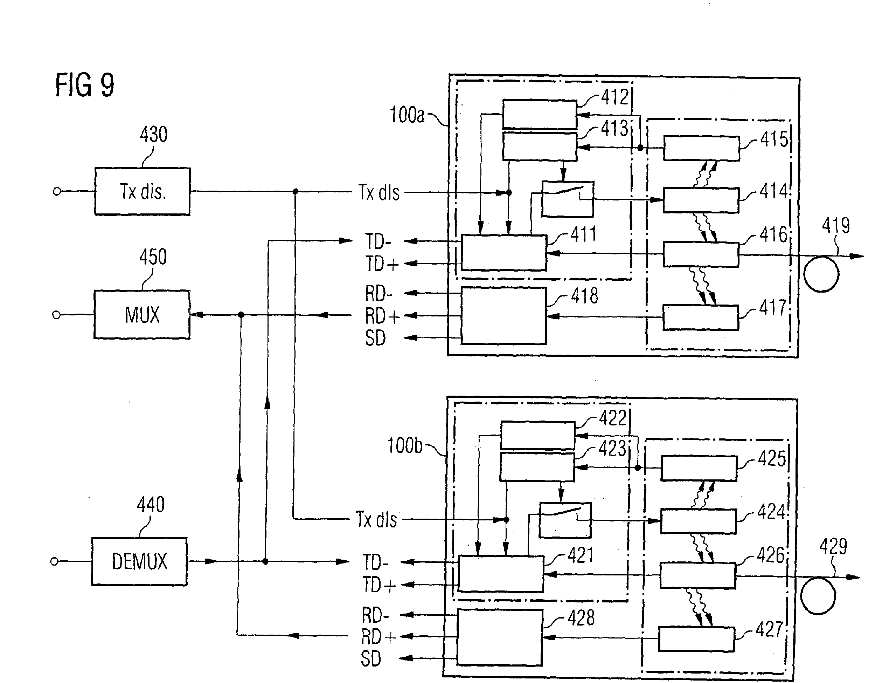

Bevor diese Ausgestaltungen der Unterbaugruppen 100 erläutert werden, werden allerdings zunächst unter Bezugnahme auf die Figur 9 die funktionellen Komponenten des Transceivers 200 näher betrachtet.

Es sind zwei bidirektionale optische Unterbaugruppen 100a, 100b vorhanden, die bis auf den Umstand, dass die emittierte und empfangene Wellenlänge vertauscht sind, identisch sind. Jede Unterbaugruppe 100a, 100b weist einen Lasertreiber 411, 421, eine Leistungs-Überwachungseinrichtung 412, 422 mit einer zugeordneten automatischen Abschalteinheit 413, 423, eine Laserdiode 414, 424, eine Monitordiode 415, 425, einen Strahlteiler 416, 426, einen Fotodetektor 417, 427 und eine Empfangsschaltung 418, 428 auf. Mit dem Strahlteiler 416, 426 ist ein Lichtwellenleiter 419, 429 gekoppelt, bei dem es sich bevorzugt um eine Singlemode-Lichtleitfaser handelt.

Die Funktionsweise ist an sich bekannt. Die Laserdiode 414, 424 wird durch den Lasertreiber 411, 421 angetrieben, der mit einem zu übertragenden digitalen Signal an seinen Eingängen TD-, TD+ beaufschlagt wird. Ein Teil der von der Laserdiode 414, 424 emittierten Strahlung wird von der Monitordiode 415, 425 detektiert und der Leistungs-Überwachungsvorrichtung 412, 422 zugeführt, die entsprechend der ermittelten Laserleistung ein Steuersignal an den Lasertreiber 411, 421 abgibt. Bei Verletzung vorgegebener Kriterien oder bei Anliegen eines entsprechenden externen Steuersignals Tx dis (Transmit disable) erfolgt ein automatisches Abschalten des Lasers 414, 424 durch die Abschalteinheit 413, 423.

Das vom Laser 4141, 424 emittierte Licht wird über den Strahlteiler 416, 426 in die Lichtleitfaser 419, 429 eingekoppelt. Auf der Lichtleitfaser 419, 429 wird Licht bidirektional übertragen. Licht einer zu detektierenden Wellenlänge, die sich von der Wellenlänge des emittierten Licht des Lasers 414, 424 unterscheidet, wird über die Lichtleitfaser 419, 429 empfangen und von dem Strahlteiler 416, 426 dem Fotodetektor 417, 427 zugeführt. Das detektierte Signal wird in der Empfangsschaltung 418, 428 aufbereitet und an Ausgängen RD-, RD+ als regeneriertes elektrisches Signal ausgegeben. Die Ausgang "SD" (Signal Detect) gibt an, ob ein empfangenes Signal vorliegt.

Ein externes Steuersignals Tx dis (Transmit disable) kann über eine Einheit 430 gleichzeitig beiden Unterbaugruppen 100a, 100b zugeführt werden, so dass im Bedarfsfall beide Laser gleichzeitig abgeschaltet werden.

Die Anordnung der Figur 9 zeichnet sich dadurch aus, dass in einem bidirektionalen Transceiver beide Unterbaugruppen 100a, 100b als bidirektionale Einheiten sowohl mit einem Laser 414, 424 als auch mit einem Detektor 417, 427 ausgeführt sind. Der Transceiver mit den Unterbaugaugruppen 100a, 100b kann mit einem baugleichen Transceiver (am anderen Ende der Lichtleitfasern 419, 429) kommunizieren. Hierzu ist beispielsweise vorgesehen, dass der Laser 414 der Unterbaugruppe 100a Licht einer Wellenlänge von 1300 nm emittiert, während die Fotodiode 417 Licht einer Wellenlänge von 850 nm empfängt. Die Unterbaugruppe 100b sendet dagegen Licht einer Wellenlänge von 850 nm aus und empfängt Licht einer Wellenlänge von 1300 nm. Die jeweilige Unterbaugruppe 100a, 100b kann dementsprechend mit der ihr gegenüberliegenden Unterbaugruppe 100b, 100a eines baugleich ausgebildeten Transceivers kommunizieren.

Dabei sind die Wellenlängenkombinationen nahezu beliebig wählbar. Bevorzugt werden Wellenlängenkombinationen von 850nm/1310 nm, 850 nm/1490 nm, 850 nm/1550 nm oder auch 1310/1550 nm gewählt. Von der gewählten Wellenlängenkombination hängt unter anderem ab, ob eine Signalübertragung zwischen zwei Transceivern über Single-Mode- oder Multi-Mode Fasern erfolgt.

Die Anordnung der Figur 9 zeichnet sich des Weiteren durch einen zusätzlichen Demultiplexer 440 und Multiplexer 450 aus. Der Demultiplexer 440 ist ein 1:2 Demultiplexer und der Multiplexer 450 ein 2:1 Multiplexer. Durch ihre Verwendung kann bei unveränderter äußerer Beschaltung des Transceivers (d. h. unter Beibehaltung des elektrischen Interface des Transceivers) die Übertragungskapazität pro Faserpaar 419, 429 verdoppelt werden. Für einen Link werden dabei, wie erläutert, zwei baugleiche Transceiver verwendet, deren Fasern sich nicht kreuzen müssen. Die zu übertragenen Daten einer vorgegebenen Bandbreite werden durch den Demultiplexer 440 in zwei Teildatenströme aufgeteilt, die jeweils die halbe Bandbreite der zu übertragenden Bandbreite aufweisen.

Die Daten der beiden Teildatenströme werden jeweils über eine Unterbaugruppe 100a, 100b und die zugehörige Lichtleitfaser 419, 429 an einen baugleichen Transceiver übertragen. Gleichzeitig werden von einem solchen baugleichen Transceiver übertragene Teildatenströme von den Unterbaugruppen 100a, 100b empfangen und dem Multiplexer 450 zugeführt. In dem Multiplexer 450 werden die Teildatenströme zu einem empfangenen elektrischen Datenstrom mit der doppelten, ursprünglichen Bandbreite zusammengesetzt. Auf diese Weise kann eine Bandbreite der Datenübertragung realisiert werden, die doppelt so groß ist wie die Bandbreite eines einzelnen Laserbauelements bzw. Empfangsbauelementes.

Zur Erhöhung der Bandbreite der zwischen zwei Transceivern 200 übertragbaren Daten ist es somit vorgesehen, mittels des Demultiplexers 240 den zu übertragenen Datenstrom in zwei Teildatenströme jeweils mit einer Bandbreite von 50 % des zu übertragenden Datenstroms aufzuteilen. Die beiden Teildatenströme werden an die beiden in dem Transceiver 200 angeordneten optoelektronischen Unterbaugruppen 100a, 100b geleitet und in optische Signale umgewandelt. Der Datenstrom wird also auf zwei Sendebauelemente aufgeteilt und - jeweils mit der halben Bandbreite - gleichzeitig über zwei angeschlossene Lichtleitfasern zu einem entsprechend aufgebauten Transceiver übertragen. Bei dem anderen Transceiver werden die beiden Datenströme über einen Multiplexer wieder zusammengeführt, so dass insgesamt eine Datenübertragung mit einer doppelten Bandbreite im Vergleich zu der jeweils durch einen Sender und einen Empfänger bereitgestellten Bandbreite möglich ist. Durch die bidirektionale Auslastung beider Fasern und ein Multiplexen bzw. Demultiplexen des Datenstromes kann die Kapazität bestehender Fasernetze verdoppelt werden.

Es wird nun auf den Aufbau der Unterbaugruppen des Transceivers eingegangen.

Die Figur 1 zeigt eine Anordnung mit zwei Modulen 1, 2 für eine bidirektionale Datenübertragung. Die Module sind insofern komplementär zueinander ausgebildet, als das von dem ersten Modul 1 ausgesandte Licht einer ersten Wellenlänge von dem zweiten Modul 2 detektiert und das von dem zweiten Modul 2 ausgesandte Licht einer zweiten Wellenlänge von dem ersten Modul 1 detektiert wird. Zwischen den Modulen 1, 2 befindet sich ein Signalübertragungsabschnitt L, in dem die die Signale in der Regel über Glasfasern oder andere Lichtwellenleiter übertragen werden. Bevorzugt erfolgt eine Übertragung über einen Multimode-Wellenleiter. Die direkte Gegenüberstellung der Module 1, 2 in der Figur 1 ist somit nur schematisch zu verstehen.

Das erste Modul 1 weist ein Trägersubstrat 11, eine Sendeeinrichtung 12, eine Monitordiode 13 und eine Empfangseinrichtung 14 auf. Bei der Sendeeinrichtung 12 handelt es sich bevorzugt um eine VCSEL-Laserdiode mit VCSEL-Struktur 121, die in einem vorgefertigten Chip ausgebildet ist. Die Laserdiode 12 ist upside-down, also mit der lichtemittierenden Seite nach unten auf dem Trägersubstrat 11 montiert, so dass der lichtemittierende Bereich 121 unmittelbar an das Trägersubstrat 11 angrenzt.

Auf der Rückseite der Laserdiode 12 ist eine Monitordiode 13 mit einem lichtempfindlichen pn-Übergang 131 angeordnet, die über Bonddrähte kontaktiert wird. Die Monitordiode 13 detektiert einen Bruchteil des von der Laserdiode 12 ausgesandten Lichts. Sie ist mit einer Steuer-/Regeleinrichtung (nicht dargestellt) zur Regelung der Ausgangsleistung der Laserdiode 1 verbunden.

Die Monitordiode 13 ist ebenfalls bevorzugt als vorgefertigter Chip ausgebildet, bevorzugt in einem InP-Substrat. Alternativ kann die Monitordiode jedoch auch monolithisch in die Laserdiode 12 integriert sein. Für diesen Fall ist auf der dem Trägersubstrat 11 abgewandten Seite ein pn-Übergang in die Laserdiode 12 integriert und etwa über Bonddrähte kontaktiert.

Die Laserdiode 12 sendet Licht einer ersten Wellenlänge λ1 aus, wobei λ1 bevorzugt bei etwa 1310 nm, alternativ bei etwa 1490 nm oder etwa 1550 nm liegt. Ein Bruchteil des Lichts wird in Richtung der Monitordiode 13 aus dem Resonator der Laserdiode 12 ausgekoppelt und von der Monitordiode 13 zu Monitorzwecken detektiert. Das Substrat der Laserdiode 12 ist dabei für das ausgesandte Licht der Wellenlänge λ 1 transparent, ebenso das Substrat der Monitordiode 13. Das Substrat der Laserdiode 12 besteht dabei beispielsweise aus GaAs, das für Licht mit Wellenlängen oberhalb 950 nm lichtdurchlässig ist.

Das Trägersubstrat 11 besteht bevorzugt aus Silizium. Silizium ist für Wellenlängen oberhalb etwa 1100 nm transparent. Es kann jedoch auch ein anderes Material als Trägersubstrat verwendet werden, das für die ausgesandte Wellenlänge λ1 transparent ist.

Das Empfangsbauelement 14 ist in das Trägersubstrat 11 integriert. Hierzu bildet das Trägersubstrat an der dem Sendebauelement 12 abgewandten Seite eine pn-Übergang aus. Die Verwendung von Silizium als Trägersubstrat 11 und als Material des Empfangsbauelements 14 ist besonders kostengünstig.

Das Empfangsbauelement 14 detektiert Licht einer zweiten Wellenlänge λ2, die kleiner ist als die erste Wellenlänge λ1. Das Trägersubstrat 11 ist für die zweite Wellenlänge λ2 nicht transparent, so dass eine optische Isolation zwischen dem Sendebauelement 12 und dem Empfangsbauelement 14 hinsichtlich des empfangenen Licht der Wellenlänge λ2 vorliegt. Das von der Laserdiode 12 ausgesandte Licht der Wellenlänge λ1 strahlt dagegen durch das Trägersubstrat 11 und auch die Empfangsdiode 14 ungestört hindurch.

Sofern für λ1 und λ2 die Wellenlängen 1550 nm und 1310 nm gewählt werden, muss das Trägersubstrat aus einem anderen Material als Silizium bestehen, da Silizium für diese Wellenlängen transparent ist und somit eine optische Isolation zwischen dem Sendebauelement 12 und dem Empfangsbauelement 14 hinsichtlich des empfangenen Licht der Wellenlänge λ2 nicht mehr vorliegt. Beispielsweise besteht das Trägersubstrat 11 für diesen Fall aus InP oder Saphir mit Germaniumschichten.

Das komplementäre Modul 2 weist ebenfalls ein Trägersubstrat 21, ein Sendebauelement 22, ein Empfangsbauelement 24 und eine Monitordiode 23 auf.

Bei der Sendeeinrichtung handelt es sich bevorzugt wiederum um eine VCSEL-Laserdiode 22 mit einem lichtemittierenden Bereich 221, der Licht der zweiten Wellenlänge λ2 aussendet. Die Laserdiode 22 ist upside-down als Chip 22 auf dem Substrat 21 angebracht. Das Substrat der Laserdiode 12 besteht bevorzugt aus GaAs, das für Licht mit Wellenlängen oberhalb 950 nm lichtdurchlässig ist.

Auf der dem Trägersubstrat 21 abgewandten Seite der Laserdiode 22 ist bei dieser Ausgestaltung das Empfangsbauelement 24 angeordnet, das bevorzugt als vorgefertigter Photodioden-Chip (etwa aus InP) mit einem integrierten pn-Übergang 241 ausgebildet ist. Eine Kontaktierung der Empfangsdiode 24 erfolgt über Bonddrähte 9. Die Empfangsdiode detektiert Licht der Wellenlänge λ1. Insofern ist das Modul 2 komplementär zu dem anderen Modul 1.

Die Monitordiode 23 ist beim dem Modul 2 in das Trägersubstrat 21 integriert. Die Monitordiode 23 befindet sich gemäß Figur 1 dabei bevorzugt auf der der Laserdiode 22 zugewandten Seite des Trägersubstrats 21.

Das Trägersubstrat 21 ist für das von der Laserdiode 22 ausgesandte Licht der Wellenlänge λ2 transparent, ebenso wie für das von der Laserdiode 12 des komplementären Moduls 1 ausgesandte Licht der Wellenlänge λ1. Das Substrat der Laserdiode 22 selbst dagegen ist nur für das von der Empfängerdiode 204 detektierte Licht der Wellenlänge λ1 transparent, nicht dagegen für das ausgesandte Licht. Aus dem Resonator der Laserdiode 22 in Richtung der Empfangsdiode 24 ausgesandtes Licht wird daher absorbiert und stört die Empfangsdiode 24 nicht. Das Substrat der Laserdiode 22 wird dementsprechend als Blockfilter. Wahlweise kann auf der der Empfangsdiode 24 zugewandten Seite der Laserdiode 22 zusätzlich ein Sperrfilter angeordnet sein. Zusätzliche Sperrfilter können auch bei dem Modul 1 vorgesehen sein.

Das vom der Laserdiode 22 ausgesandte Licht der Wellenlänge λ 2 durchstrahlt zunächst die Monitordiode 23. Hierbei wird ein geringer Bruchteil des ausgesandten Lichts für Monitorzwecke detektiert. Der nicht detektierte Anteil durchstrahlt das Trägersubstrat 21 und wird aus dem Modul 2 ausgekoppelt.

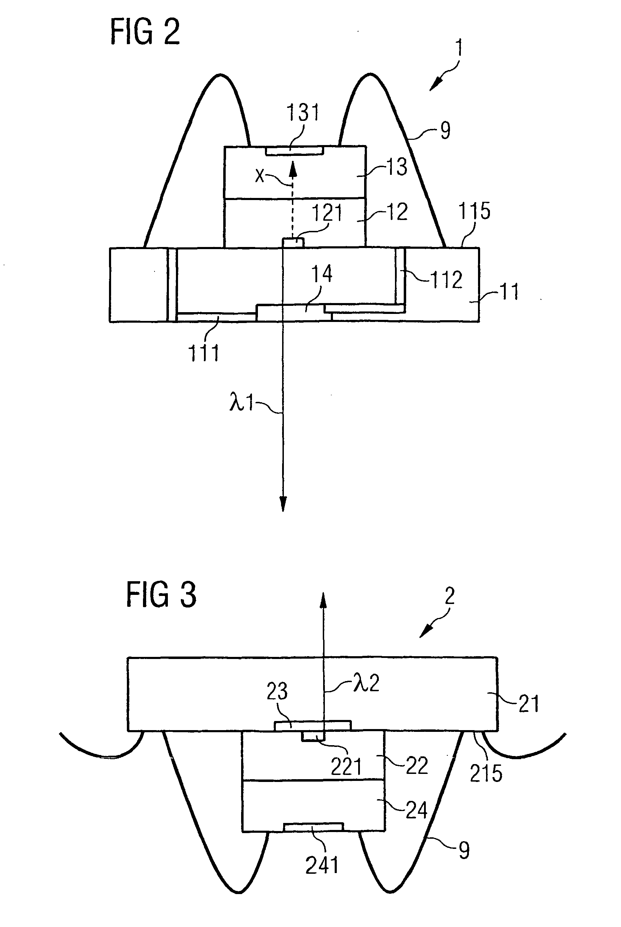

Die Figur 2 zeigt etwas detaillierter den Aufbau des Moduls 1 der Figur 1.

Auf der einen Oberseite 115 des Silizium-Trägersubstrats 11, das nur für Licht der ausgesandten Wellenlänge λ1 optisch transparent ist, ist in Flip-Chip-Montage die VCSEL-Laserdiode 12 angeordnet. Der p- und der n-Kontakt der Laserdiode sind dabei auf der Montageseite, d.h. der dem Trägersubstrat 201 zugewandten Seite angeordnet. Die Kontaktierung erfolgt über entsprechende Metallisierungen auf der Oberseite 115 des Trägersubstrats 11 (nicht dargestellt).

Auf der Laserdiode 12 ist rückseitig die Monitordiode 13 montiert, einen Bruchteil X des Lichts der Laserdiode 12 detektiert. Der elektrische Anschluss der Monitordiode 13 erfolgt über zwei Bonddrähte 9, die mit entsprechenden Bond-Pads auf der Oberseite des Trägersubstrats verbunden sind (nicht dargestellt).

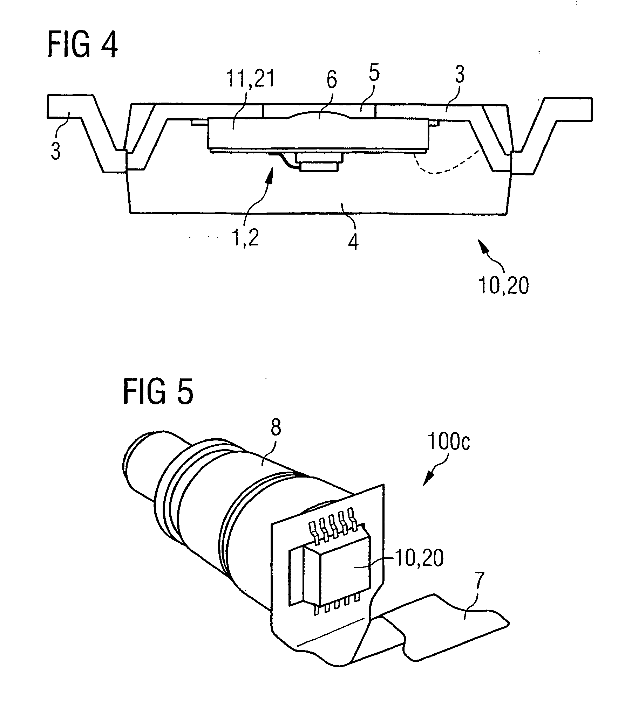

Im Silizium-Trägersubstrat 11 befinden sich zwei Durchkontaktierungen 111, 112, die die in das Trägersubstrat 101 integrierte Empfangsdiode 14 kontaktieren. Damit befinden sich alle elektrischen Kontakte auf einer Ebene, der Montageebene, die durch die eine Oberseite 115 des Trägersubstrats 11 gebildet ist. Auf diese Weise kann von der Montageebene 15 dann in einfacher Weise auf einen Leadframe gebondet werden, wie in der Figur 4 noch dargestellt ist.

Das zweite Modul 2 der Figur 1 ist in der Figur 3 detailliert dargestellt. Das Trägersubstrat 21 und ist sowohl für Licht der detektierten Wellenlänge λ1 als auch für Licht der ausgesandten Wellenlänge λ2 transparent. Es besteht bevorzugt aus Saphir. Saphir ist für Wellenlängen zwischen 850 nm und 1550 nm transparent.

Die VCSEL-Laserdiode 22 ist wiederum mittels Flip-Chip-Montage auf der einen Seite 215 des Trägersubstrats 21 montiert, so dass beide Kontakte auf der gleichen Seite sind. Insofern ist der Aufbau vergleichbar mit dem der Laserdiode 12 der Figur 2.

Auf der VCSEL-Laserdiode 22 ist rückseitig die für eine andere Wellenlänge λ2 empfindliche Empfangsdiode 24 mit dem pn-Übergang 241 montiert. Vorzugsweise handelt es sich um eine Empfangsdiode aus einem InP-Substrat. Sie dient der Detektion des von dem Modul 1 ausgesandten Lichts der Wellenlänge λ1, das von dem komplementären Modul 1 ausgesandt wurde.

In den Saphir integriert ist die Monitordiode 23. Hierzu ist bevorzugt eine kristalline Silizium-Schicht in den Saphir integriert, die einen pn-Übergang bereitstellt. Die Monitordiode 23 ist bevorzugt auf der der Laserdiode 22 zugewandten Seite des Trägersubstrats 21 augebildet. Dies ermöglicht eine einfache Kontaktierung der Monitordiode über Kontakte auf der Oberfläche 115 des Trägersubstrats.

Die Figur 7 zeigt eine alternative Ausgestaltung des Moduls der Figur 3. Bei dieser Ausgestaltung ist die Monitordiode 23' nicht in das Trägersubstrat 21, sondern statt dessen in die Laserdiode 22' selbst integriert. Hierzu ist ein pn-Übergang zwischen die VCSEL-Struktur 221 und das (bevorzugt aus GaAs bestehende) Substrat der Laserdiode integriert. Die Laserdiode 22' ist bei diesem Ausführungsbeispiel etwas größer ausgebildet als die Empfangsdiode 24, so dass die Möglichkeit einer Kontaktierung eines gemeinsamen Kontakts der Laserdiode 22' und der integrierten Monitordiode 23' über einen Bonddraht 9 besteht, der zum Trägersubstrat 21 oder alternativ direkt mit einem Leadframe kontaktiert ist.

Auch bei dieser Ausgestaltung wirkt das Substrat der Laserdiode 22' als Blockfilter für in Richtung der Empfangsdiode 24 ausgestrahltes Licht, nachdem dieses die Monitordiode 23' passiert hat.

Die Figur 4 zeigt das bidirektionale Modul 1, 2 der Figuren 2, 3, 7 als gehäustes Modul 10, 20 in einem Standardgehäuse. Das Trägersubstrat 11, 21 kann dabei eine auf der optischen Achse befindliche Linse 6 aufweisen, die das ausgesandte bzw. empfangene Licht zur besseren Kopplung mit einem Lichtwellenleiter formt. Das Trägersubstrat 11, 21 ist auf einem Leadframe 3 angeordnet, der eine mittige Aussparung 5 für einen optischen Zugang zu dem Modul aufweist und die Kontaktierung des Moduls 1, 2 bereitstellt. Bis auf den optischen Zugang 5 ist die Anordnung von Modul 1, 2 und Leadframe 3 mit einer nicht transparenten Kunststoffmasse umspritzt. Derartige Gehäuse sind an sich bekannt, etwa aus der DE 102 01 102 A1, so dass auf sie nicht näher eingegangen wird.

Die Figur 5 zeigt eine Unterbaugruppe 100c mit dem gehäusten Modul 10, 20 der Figur 4 in Verbindung mit einer optischen Steckeraufnahme 8 zur Aufnahme eines Lichtwellenleiters verbunden. Gleichzeitig ist ein Flexleiter 7 mit Leiterbahnen und Kontaktpads zur Kontaktierung der Anschlusskontakte des Moduls 10, 20 vorgesehen. Das nicht mit dem Modul 10, 20 verbundene Ende des Flexleiters 7 ist mit einer Leiterplatte (nicht dargestellt) verbunden.

Es wird darauf hingewiesen, dass ein Einsatz der Module 1, 2 gemäß den Figuren 1 bis 3 und 7 in beliebigen optischen Sendern, Empfängern und Transceivern erfolgen kann und der Einsatz solcher Module 1, 2 zwar vorteilhaft, aber nicht notwendigerweise in Transceivern gemäß den Figuren 6 und 9 erfolgt.

Die Figur 8 zeigt eine alternative Ausgestaltung einer Unterbaugruppe 100d, die in einem optoelektronischen Transceiver 200 gemäß Figur 6 einsetzbar ist. Dabei sind wiederum zwei Unterbaugruppen 100d in Anordnung nebeneinander in dem Transceiver 200 angeordnet, jeweils in einer Ausrichtung derart, dass die optische Achse der Unterbaugruppe 100d jeweils parallel zur Längsachse des Transceivers 200 verläuft, so dass über die optischen Ports 203, 204 eine optische Kopplung jeweils mit einer Lichtleitfaser erfolgen kann.

Die Unterbaugruppe 100d weist ein TO-Gehäuse auf, das in an sich bekannter Weise aus einer Bodenplatte 310 mit Durchkontaktierungen für eine Mehrzahl von Kontaktpins 320 und einer Kappe 330 mit einem optischen Fenster 331 besteht, die auf der Bodenplatte 310 hermetisch dicht befestigt ist. Die Kappe 330 ist von einer Wandungshülse 340 umgeben, an deren Stirnseite 341 eine Abdeckkappe 350 mit einer Koppeleinrichtung 360 zur Aufnahme eines anzuschließenden Lichtwellenleiters angebracht ist, bei dem es sich bevorzugt um einen Single-Mode Lichtwellenleiter handelt. Dabei wird im Rahmen einer aktiven Justage die Abdeckkappe 350 vor einer endgültigen Fixierung gegenüber der Wandungshülse 340 justiert. Ein derartiger Aufbau ist beispielsweise aus der WO 98/10319 A1 bekannt.

Auf der Bodenplatte 310 des TO-Gehäuses sind ein Sende-Mikromodul 370 und ein Empfangs-Mikromodul 380 angeordnet. Das Sende-Mikromodul 370 weist als wesentliche Komponenten einen kantenemittierenden Halbleiterlaser 371, ein 45° Prisma 372 mit einer Monitordiode 373, einen Strahlteiler 374 mit einer strahlteilenden, mit einem wellenlängenselektiven Filter versehenen Fläche 375 und einen Silizium-Träger 376 mit einer integrierten Linse 377 auf. Diese Komponenten sind auf einem Träger 378 angeordnet. Das Empfangs-Mikromodul 380 weist auf einem Träger 381 eine Fotodiode 382 auf.

In der Bodenplatte 310 des TO-Gehäuses ist eine Vertiefung 311 ausgebildet, in die das Sende-Mikromodul 380 eingesetzt ist. Darüber wird auf der Oberfläche der Bodenplatte 310 das Sende-Mikromodul 370 angeordnet. Das Trägerelement 378 des Sende-Mikromoduls ist dabei für die Wellenlänge, die durch die Fotodiode 382 detektiert wird, transparent. Von dem Halbleiterlaser 371 ausgesandtes Licht wird an der strahlteilenden Fläche 375 reflektiert und über die Linse 377 abgestrahlt. Empfangenes Licht einer anderen Wellenlänge passiert dagegen den wellenlängenselektiven Filter der strahlteilenden Fläche 375, durchquert das Trägerelement 387 und wird von der Fotodiode 382 des Empfangs-Mikromoduls 380 detektiert. Das Sende-Mikromodul 370 und das Empfangs-Mikromodul 380 werden jeweils über die Kontaktpins 320 und nicht dargestellte Bonddrähte kontaktiert.

Der beschriebene Aufbau stellt ebenfalls in sehr kompakter Weise eine Unterbaugruppe mit einer Sende- und Empfangsanordnung bereit, mit der gleichzeitig Licht einer ersten Wellenlänge ausgesandt und Licht einer zweiten Wellenlänge detektiert werden kann.

Das verwendete TO-Gehäuse weist bevorzugt Außenmaße senkrecht zur optischen Achse des austretenden Laserlichts von maximal 6,5 mm auf, so dass eine Montage in Small-Form-Factor (SFF)-Transceivern und Small-Form-Factor-Pluggable (SFP-Transceivern) kleiner Bauart möglich ist.

Die Erfindung beschränkt sich in ihrer Ausgestaltung nicht auf die vorstehend dargestellten Ausführungsbeispiele, die lediglich beispielhaft zu verstehen sind. Der Fachmann erkannt, dass zahlreiche alternative Ausführungsvarianten existieren, die trotz ihrer Abweichung von den beschriebenen Ausführungsbeispielen von der in den nachfolgenden Ansprüchen definierten Lehre Gebrauch machen.

## Patentansprüche

1. Optoelektronischer Transceiver für eine bidirektionale optische Signalübertragung mit
- einer ersten bidirektionalen optischen Unterbaugruppe (100; 100a; 100c; 100d) zum gleichzeitigen Aussenden und Empfang optischer Signale, und
- einer zweiten bidirektionalen optischen Unterbaugruppe (100; 100b; 100c; 100d) zum gleichzeitigen Aussenden und Empfang optischer Signale,
**gekennzeichnet durch**
- ein längliches Gehäuse (201) mit einer Breite von maximal 13,5 mm, in dem die erste und die zweite optische Unterbaugruppe gemeinsam angeordnet sind, und zwar in Anordnung nebeneinander, jeweils in einer Ausrichtung, dass die optische Achse der Unterbaugruppe jeweils parallel zur Längsachse des länglichen Gehäuses (201) verläuft, und
- eine optische Schnittstelle (205) zur Ankopplung zweier Lichtwellenleiter, wobei jeweils ein Lichtwellenleiter mit einer der beiden Unterbaugruppen (100; 100a, 100b; 100c; 100d) optisch koppelbar ist.

2. Transceiver nach Anspruch 1, zusätzlich aufweisend einen Multiplexer (250) und einen Demultiplexer (240), wobei
- der Demultiplexer (240) einen durch den Transceiver zu übertragenden elektrischen Datenstrom einer vorgegebenen Bandbreite in einen ersten und einen zweiten zu übertragenden Teildatenstrom jeweils einer geringeren Bandbreite aufteilt,
- der erste zu übertragende Teildatenstrom der ersten Unterbaugruppe und der zweite zu übertragende Teildatenstrom der zweiten Unterbaugruppe zugeführt wird, und
- die ersten und zweiten zu übertragenden Teildatenströme über die erste und zweite Unterbaugruppe als optische Signale ausgesandt werden, und wobei
- die erste Unterbaugruppe und die zweite Unterbaugruppe gleichzeitig zum Aussenden optischer Signale einen ersten zu empfangenden optischen Teildatenstrom und einen zweiten zu empfangenden optischen Teildatenstrom jeweils einer bestimmten Bandbreite empfangen, in elektrische Signale umwandeln und dem Multiplexer (250) zuführen, der die beiden empfangenen Teildatenströme zu einem emfangenen elektrischen Datenstrom einer vorgegebenen, höheren Bandbreite zusammensetzt.

3. Transceiver nach Anspruch 2, wobei der Demultiplexer (240) ein 1:2 Demultiplexer und der Multiplexer (250) ein 2:1 Multiplexer ist und die vorgegebene Bandbreiten des zu übertragenden und des empfangenen Datensignals identisch sind.

4. Transceiver nach Anspruch 1, wobei der Multiplexer (250) und der Demultiplexer (240) in den Transceiver (200) integriert sind.

5. Transceiver nach Anspruch 1, wobei die erste Unterbaugruppe aufweist:
- ein Sendebauelement (12), das Licht einer ersten Wellenlänge (λ1) aussendet,
- ein Empfangsbauelement (14), das Licht einer zweiten Wellenlänge (λ2) detektiert,
- ein für das Licht der ersten Wellenlänge transparenten Trägersubstrat (11), auf dem das Sendebauelement angeordnet ist, und
- ein Monitorbauelement (13), das einen Bruchteil des vom Sendebauelement (12) ausgestrahlten Lichts detektiert, wobei
- das Empfangsbauelement (14) in das Trägersubstrat (11) integriert ist,
- das Empfangsbauelement (14) und das Sendebauelement (12) in Bezug auf die Richtung des ausgesandten bzw. empfangenen Lichts hintereinander angeordnet sind,
- das Empfangsbauelement (14) für das Licht der ersten Wellenlänge (λ1) optisch transparent ist und
- vom Sendebauelement (12) ausgesandtes Licht das Trägersubstrat (11) und das Empfangsbauelement (14) durchstrahlt.

6. Transceiver nach Anspruch 5, wobei das Sendebauelement (12) mit der Oberseite nach unten auf dem Trägersubstrat (11) montiert ist.

7. Transceiver nach Anspruch 5, wobei das Empfangsbauelement (14) auf der dem Sendebauelement (12) abgewandten Seite des Trägersubstrats (11) in dieses integriert ist.

8. Transceiver nach Anspruch 5, wobei das in das Trägersubstrat integrierte Empfangsbauelement (14) einen in das Trägersubstrat integrierten pn-Übergang ausbildet.

9. Transceiver nach Anspruch 7, **dadurch gekennzeichnet, dass** das Trägersubstrat (11) zwei Durchkontaktierungen (111, 112) aufweist, die von der dem Sendebauelement (12) zugewandten Seite (115) des Trägersubstrats (11) ausgehen und das Empfangsbauelement (14) kontaktieren.

10. Transceiver nach Anspruch 5, wobei das Trägersubstrat (11) für Licht der zweiten Wellenlänge (λ2) nicht transparent ist.

11. Transceiver nach Anspruch 5, wobei die erste Wellenlänge (λ1) größer ist als die zweite Wellenlänge (λ2).

12. Transceiver nach Anspruch 11, wobei die erste Wellenlänge (λ1) bei 1310 nm, 1490 nm oder 1550 nm und die zweite Wellenlänge (λ2) bei 850 nm oder 1310 nm liegt.

13. Transceiver nach Anspruch 5, wobei das Trägersubstrat (11) aus Silizium besteht.

14. Transceiver nach Anspruch 5, wobei das Monitorbauelement (13) auf der dem Trägersubstrat (11) abgewandten Seite des Sendebauelementes (12) angeordnet ist.

15. Transceiver nach Anspruch 5, wobei das Sendebauelement als Laserchip (12) und das Monitorbauelement als Monitordioden-Chip (13) ausgebildet sind.

16. Transceiver nach Anspruch 5, wobei das Monitorbauelement auf der dem Trägersubstrat abgewandten Seite des Sendebauelementes in dieses integriert ist.

17. Transceiver nach Anspruch 1, wobei die zweite Unterbaugruppe aufweist:
- ein Sendebauelement (22), das Licht einer zweiten Wellenlänge (λ2) aussendet,
- ein Empfangsbauelement (24), das Licht einer ersten Wellenlänge (λ1) detektiert,
- ein für das Licht der ersten Wellenlänge (λ1) und der zweiten Wellenlänge (λ2) transparentes Trägersubstrat (21), auf dem das Sendebauelement angeordnet (22) ist, und
- ein Monitorbauelement (23), das einen Bruchteil des vom Sendebauelement (22) ausgestrahlten Lichts detektiert, wobei
- das Empfangsbauelement (24) und das Sendebauelement (22) in Bezug auf die Richtung des ausgesandten bzw. empfangenen Lichts hintereinander angeordnet sind,
- das Sendebauelement (22) für das Licht der ersten Wellenlänge optisch transparent ist,
- vom Sendebauelement (22) ausgesandtes Licht das Trägersubstrat (21) durchstrahlt und
- das vom Empfangsbauelement (24) empfangene Licht das Trägersubstrat (21) und das Sendebauelement (22) durchstrahlt.

18. Transceiver nach Anspruch 17, wobei das Monitorbauelement (23) in das Trägersubstrat (21) integriert ist.

19. Transceiver nach Anspruch 18, wobei das Monitorbauelement (23) auf der dem Sendebauelement (22) zugewandten Seite des Trägersubstrats (21) in dieses integriert ist.

20. Transceiver nach Anspruch 18, wobei das in das Trägersubstrat (21) integrierte Monitorbauelement (23) einen in das Trägersubstrat (21) integrierten pn-Übergang ausbildet.

21. Transceiver nach Anspruch 17, wobei das Monitorbauelement (23') in das Sendebauelement (22') integriert ist.

22. Transceiver nach Anspruch 17, wobei das Sendebauelement (22) mit der Oberseite nach unten auf dem Trägersubstrat (21) angeordnet ist.

23. Transceiver nach Anspruch 17, wobei die photoempfindliche Schicht (241) des Empfangsbauelements (24) auf der dem Sendebauelement (22) abgewandten Seite des Empfangsbauelements (24) angeordnet ist.

24. Transceiver nach Anspruch 17, wobei das Substrat des Sendebauelements (22) für das ausgesandte Licht der zweiten Wellenlänge (λ2) nicht transparent ist.

25. Transceiver nach Anspruch 17, wobei die erste Wellenlänge (λ1) größer ist als die zweite Wellenlänge (λ2).

26. Transceiver nach Anspruch 25, wobei die erste Wellenlänge (λ1) bei 1310 nm, 1490 nm oder 1550 nm und die zweite Wellenlänge (λ2) bei 850 nm oder 1310 nm liegt.

27. Transceiver nach Anspruch 17, wobei das Trägersubstrat (21) aus Saphir besteht.

28. Transceiver nach Anspruch 17, wobei das Sendebauelement als Laserchip (22) und das Empfangsbauelement als Photodioden-Chip (24) ausgebildet sind.

29. Transceiver nach Anspruch 17, wobei das Sendebauelement durch eine vertikal emittierende Laserdiode gebildet ist.

30. Transceiver nach Anspruch 1, wobei eine Unterbaugruppe aufweist:
- ein Sende-Mikromodul (370), das auf einem ersten Trägerelement (378) ein Laserbauelement (371), das Licht einer ersten Wellenlänge emittiert, aufweist,
- ein Empfangs-Mikromodul (380), das auf einem zweiten Trägerelement (381) eine Fotodiode (382) aufweist, die Licht einer zweiten Wellenlänge detektiert, und
- ein TO-Gehäuse mit einer Bodenplatte (310), die der Anordnung der Sende-Mikromoduls und des Empfangs-Mikromoduls dient, wobei
- das Sende-Mikromodul (370) und das Empfangs-Mikromodul (380) in Bezug auf das emittierte bzw. zu detektierende Licht übereinander angeordnet sind, und wobei
- das erste Trägerelement (378) des Sende-Mikromoduls (370) für das zu detektierende Licht transparent ist.

31. Transceiver nach Anspruch 30, wobei die Bodenplatte (310) des TO-Gehäuses eine Aussparung (311) aufweist, die der Aufnahme des Empfangs-Mikromoduls (380) dient, und das Sende-Mikromodul (370) hierüber auf der Bodenplatte (310) angeordnet ist.

## Claims

1. Optoelectronic transceiver for a bidirectional optical signal transmission having
- a first bidirectional optical subassembly (100; 100a; 100c; 100d) serving for the simultaneous emission and reception of optical signals, and
- a second bidirectional optical subassembly (100; 100b; 100c; 100d) serving for the simultaneous emission and reception of optical signals,
**characterized by**
an elongate housing (201) having a width of at most 13.5 mm, in which the first and second optical subassemblies are arranged together, to be precise in arrangement next to one another, in each case in an orientation such that the optical axis of the subassembly runs in each case parallel to the longitudinal axis of the elongate housing (201), and
- an optical interface (205) for the coupling of two optical waveguides, it being possible for a respective optical waveguide to be optically coupled to one of the tow subassemblies (100; 100a; 100b; 100c; 100d).

2. Transceiver according to Claim 1, additionally having a multiplexer (250) and a demultiplexer (240),
- the demultiplexer (240) dividing an electrical data stream having a predetermined bandwidth, which is to be transmitted by the transceiver, into a first and a second partial data stream to be transmitted, in each case having a smaller bandwidth,
- the first partial datastream to be transmitted is fed to the first subassembly and the second partial datastream to be transmitted being fed to the second subassembly, and
- the first and second partial datastreams to be transmitted being emitted as optical signals via the first and second subassemblies, and
- the first subassembly and the second subassembly, simultaneously for the emission of optical signals, receiving a first optical partial datastream to be received and a second optical partial datastream to be received, in each case having a specific bandwidth, converting them into electrical signals and feeding them to the multiplexer (250), which combines the two received partial datastreams into a received electrical datastream having a predetermined higher bandwidth.

3. Transceiver according to Claim 2, the demultiplexer (240) being a 1:2 demultiplexer and the multiplexer (250) being a 2:1 multiplexer and the predetermined bandwidths of the data signal to be transmitted and of the received data signal being identical.

4. Transceiver according to Claim 1, the multiplexer (250) and the demultiplexer (240) being integrated into the transceiver (200).

5. Transceiver according to Claim 1, the first subassembly having:
- a transmission component (12), which emits light having a first wavelength (λ1),
- a reception component (14), which detects light having a second wavelength (λ2),
- a carrier substrate (11), which is transparent to the light having the first wavelength and on which the transmission component is arranged.
- a monitor component (13) which detects a fraction of the light emitted by the transmission component (12),
- the reception component (14) being integrated into the carrier substrate (11),
- the reception component (14) and the transmission component (12) being arranged one behind the other with respect to the direction of the emitted or received light,
- the reception component (14) being optically transparent to the light having the first wavelength (λ1), and
- light emitted by the transmission component (12) radiating through the carrier substrate (11) and the reception component (14).

6. Transceiver according to Claim 5, the transmission component (12) being mounted with the top side downward on the carrier substrate (11).

7. Transceiver according to Claim 5, the reception component (14) being integrated into the carrier substrate (11) on that side of the latter which is remote from the transmission component (12).

8. Transceiver according to Claim 5, the reception component (14) integrated into the carrier substrate forming a pn junction integrated into the carrier substrate.

9. Transceiver according to Claim 7, wherein the carrier substrate (11) has two plated-through holes (111, 112), which issue from the side (115) of the carrier substrate (11) facing the transmission component (12) and contact-connect the reception component (14).

10. Transceiver according to Claim 5, the carrier substrate (11) not being transparent to light having the second wavelength (λ2).

11. Transceiver according to Claim 5, the first wavelength (λ1) being greater than the second wavelength (λ2).

12. Transceiver according to Claim 11, the first wavelength (λ1) being 1310 nm, 1490 nm or 1550 nm and the second wavelength (λ2) being 850 nm or 1310 nm.

13. Transceiver according to Claim 5, the carrier substrate (11) being composed of silicon.

14. Transceiver according to Claim 5, the monitor component (13) being arranged on that side of the transmission component (12) which is remote from the carrier substrate (11).

15. Transceiver according to Claim 5, the transmission component being designed as a laser chip (12) and the monitor component being designed as a monitor diode chip (13).

16. Transceiver according to Claim 5, the monitor component being integrated into the transmission component on that side of the latter which is remote from the carrier substrate.

17. Transceiver according to Claim 1, the second subassembly having:
- a transmission component (22), which emits light having a second wavelength (λ2),
- a reception component (24), which detects light having a first wavelength (λ1),
- a carrier substrate (21), which is transparent to the light having the first wavelength (λ1) and having the second wavelength (λ2) and on which the transmission component (22) is arranged, and
- a monitor component (23), which detects a fraction of the light emitted by the transmission component (22),
- the reception component (24) and the transmission component (22) being arranged one behind the other with respect to the direction of the emitted or received light,
- the transmission component (22) being optically transparent to the light having the first wavelength,
- light emitted by the transmission component (22) radiating through the carrier substrate (21) and
- the light received by the reception component (24) radiating through the carrier substrate (21) and the transmission components (22).

18. Transceiver according to Claim 17, the monitor component (23) being integrated into the carrier substrate (21).

19. Transceiver according to Claim 18, the monitor component (23) being integrated into the carrier substrate (21) on that side of the latter which faces the transmission component (22).

20. Transceiver according to Claim 18, the monitor component (23) integrated into the carrier substrate (21) forming a pn junction integrated into the carrier substrate (21).

21. Transceiver according to Claim 17, the monitor component (23') being integrated into the transmission component (22').

22. Transceiver according to Claim 17, the transmission component (22) being arranged with the top side downward on the carrier substrate (21).

23. Transceiver according to Claim 17, the photosensitive layer (241) of the reception component (24) being arranged on that side of the reception component (24) which is remote from the transmission component (22).

24. Transceiver according to Claim 17, the substrate of the transmission component (22) not being transparent to the emitted light having the second wavelength (λ2).

25. Transceiver according to Claim 17, the first wavelength (λ1) being greater than the second wavelength (λ2).

26. Transceiver according to Claim 25, the first wavelength (21) being 1310 nm, 1490 nm or 1550 nm and the second wavelength (λ2) being 850 nm or 1310 nm.

27. Transceiver according to Claim 17, the carrier substrate (21) being composed of sapphire.

28. Transceiver according to Claim 17, the transmission component being designed as a laser chip (22) and the reception component being designed as a photodiode chip (24).

29. Transceiver according to Claim 17, the transmission component being formed by a vertically emitting laser diode.

30. Transceiver according to Claim 1, a subassembly having:
- a transmission micromodule (370), which has a laser component (371) on a first carrier element (378), said laser component emitting light having a first wavelength,
- a reception micromodule (380), which has a photodiode (382) on a second carrier element (381), said photodiode detecting light having a second wavelength, and
- a TO housing having a baseplate (310), which serves for the arrangement of the transmission micromodule and of the reception micromodule,
- the transmission micromodule (370) and the reception micromodule (380) being arranged one above the other with respect to the emitted light or light to be detected, and
- the first carrier element (378) of the transmission micromodule (370) being transparent to the light to be detected.

31. Transceiver according to Claim 30, the baseplate (310) of the TO housing having a cutout (311), which serves to accommodate the reception micromodule (380), and the transmission micromodule (370) being arranged thereabove on the baseplate (310).

## Revendications

1. Emetteur-récepteur optoélectronique pour une transmission de signaux optique bidirectionnelle avec
- un premier sous-ensemble optique bidirectionnel (100 ; 100a ; 100c ; 100d) destiné à émettre et recevoir simultanément des signaux optiques, et
- un deuxième sous-ensemble optique bidirectionnel (100 ; 100b ; 100c ; 100d) destiné à émettre et recevoir simultanément des signaux optiques,
**caractérisé par**
- un boîtier allongé (201) ayant une largeur maximale de 13,5 mm, dans lequel les premier et deuxième sous-ensembles optiques sont conjointement disposés, notamment avec une disposition côte à côte, chacun dans une orientation telle que l'axe optique de chaque sous-ensemble soit parallèle à l'axe longitudinal du boîtier allongé (201), et
- une interface optique (205) destinée à coupler deux câbles à fibres optiques, chaque câble à fibres optiques pouvant être couplé optiquement avec un des deux sous-ensembles (100 ; 100a ; 1 00b ; 104c ; 100d).

2. Emetteur-récepteur selon la revendication 1, comportant en outre un multiplexeur (250) et un démultiplexeur (240), où
- le démultiplexeur (240) répartit un flux de données électriques à transmettre par l'émetteur-récepteur d'une largeur de bande prédéterminée en un premier et un deuxième flux de données partiel à transmettre d'une largeur de bande plus faible,
- le premier flux de données partiel à transmettre est amené au premier sous-ensemble et le deuxième flux de données partiel à transmettre est amené au deuxième sous-ensemble, et
- les premier et deuxième flux de données à transmettre sont émis par les premier et deuxième sous-ensembles sous forme de signaux optiques, et où
- le premier sous-ensemble et le deuxième sous-ensemble reçoivent, simultanément à l'émission de signaux optiques, un premier flux de données partiel optique à recevoir et un deuxième flux de données partiel optique à recevoir chacun d'une largeur de bande définie, les convertissent en des signaux électriques et les amènent au multiplexeur (250) qui regroupe les deux flux de données partiels reçus en un flux de données électrique reçu d'une largeur de bande prédéterminée plus élevée.

3. Emetteur-récepteur selon la revendication 2, où le démultiplexeur (240) est un démultiplexeur 1 vers 2 et le multiplexeur (250) est un multiplexeur 2 vers 1 et que les largeurs de bande prédéterminées du signal de données à émettre et à recevoir sont identiques.

4. Emetteur-récepteur selon la revendication 1, où le multiplexeur (250) et le démultiplexeur (240) sont intégrés dans l'émetteur-récepteur (200).

5. Emetteur-récepteur selon la revendication 1, où le premier sous-ensemble comporte :
- un composant d'émission (12) qui émet un rayon lumineux d'une première longueur d'onde (λ1),
- un composant de réception (14) qui détecte un rayon lumineux d'une deuxième longueur d'onde (λ2),
- un substrat de support (11), transparent pour le rayon lumineux de la première longueur d'onde, sur lequel est disposé le composant d'émission, et
- un composant de contrôle (13) qui détecte une fraction du rayon lumineux émis par le composant d'émission (12),
où
- le composant de réception (14) est intégré dans le substrat de support (11),
- le composant de réception (14) et le composant d'émission (12) sont disposés l'un derrière l'autre par rapport à la direction du rayon lumineux émis ou reçu,
- le composant de réception (14) est transparent optiquement au rayon lumineux de la première longueur d'onde (11) et
- le rayon lumineux émis par le composant d'émission (12) traverse le substrat de support (11) et le composant de réception (14).

6. Emetteur-récepteur selon la revendication 5, où le composant d'émission (12) est monté sur le substrat de support (11) avec sa partie supérieure tournée vers le bas.

7. Emetteur-récepteur selon la revendication 5, où le composant de réception (14) est intégré dans le substrat de support (11) sur le côté de celui-ci opposé au composant d'émission (12).

8. Emetteur-récepteur selon la revendication 5, où le composant de réception (14) intégré dans le substrat de support forme un passage pn intégré dans le substrat de support.

9. Emetteur-récepteur selon la revendication 7, **caractérisé en ce que** le substrat de support (11) comporte deux contacts traversant (111, 112) qui partent du côté (115) du substrat de support (11) tourné vers le composant d'émission (12) et mettent en contact le composant de réception (14).

10. Emetteur-récepteur selon la revendication 5, où le substrat de support (11) n'est pas transparent pour le rayon lumineux de la deuxième longueur d'onde (λ2).

11. Emetteur-récepteur selon la revendication 5, où la première longueur d'onde (λ1) est plus grande que la deuxième longueur d'onde (λ2).

12. Emetteur-récepteur selon la revendication 11, où la première longueur d'onde (λ1) est de 1310 nm, 1490 nm ou 1550 nm et la deuxième longueur d'onde (λ2) de 850 nm ou 1310 nm.

13. Emetteur-récepteur selon la revendication 5, où le substrat de support (11) est composé de silicium.

14. Emetteur-récepteur selon la revendication 5, où le composant de contrôle (13) est disposé sur le côté du composant d'émission (12) opposé au substrat de support (11).

15. Emetteur-récepteur selon la revendication 5, où le composant d'émission est formé en tant que puce laser (12) et que le composant de contrôle est formé en tant que puce de diodes de contrôle (13).

16. Emetteur-récepteur selon la revendication 5, où le composant de contrôle est intégré dans le composant d'émission sur le côté du composant d'émission opposé au substrat de support.

17. Emetteur-récepteur selon la revendication 1, où le deuxième sous-ensemble comporte :
- un composant d'émission (22) qui émet un rayon lumineux d'une deuxième longueur d'onde (λ2),
- un composant de réception (24) qui détecte un rayon lumineux d'une première longueur d'onde (λ1),
- un substrat de support (21), transparent pour le rayon lumineux de la première longueur d'onde (λ1) et de la deuxième longueur d'onde (λ2), sur lequel est disposé le composant d'émission (22), et
- un composant de contrôle (23) qui détecte une fraction du rayon lumineux émis par le composant d'émission (22), où
- le composant de réception (24) et le composant d'émission (22) sont disposés l'un derrière l'autre par rapport à la direction du rayon lumineux émis ou reçu,
- le composant d'émission (22) est transparent optiquement pour le rayon lumineux de la première longueur d'onde,
- le rayon lumineux émis par le composant d'émission (22) traverse le substrat de support (21) et
- le rayon lumineux reçu par le composant de réception (24) traverse le substrat de support (21) et le composant d'émission (22).

18. Emetteur-récepteur selon la revendication 17, où le composant de contrôle (23) est intégré dans le substrat de support (21).

19. Emetteur-récepteur selon la revendication 18, où le composant de contrôle (23) est intégré dans le substrat de support (21) sur le côté de celui-ci tourné vers le composant d'émission (22).

20. Emetteur-récepteur selon la revendication 18, où le composant de contrôle (23) intégré dans le substrat de support (21) forme un passage pn dans le substrat de support (21).

21. Emetteur-récepteur selon la revendication 17, où le composant de contrôle (23') est intégré dans le composant d'émission (22').

22. Emetteur-récepteur selon la revendication 17, où le composant d'émission (22) est disposé sur le substrat de support (21) avec sa partie supérieure tournée vers le bas.

23. Emetteur-récepteur selon la revendication 17, où la couche photosensible (241) du composant de réception (24) est disposée sur le côté du composant de réception (24) opposé au composant d'émission (22).

24. Emetteur-récepteur selon la revendication 17, où le substrat du composant d'émission (22) n'est pas transparent pour le rayon lumineux émis de la deuxième longueur d'onde (λ2).

25. Emetteur-récepteur selon la revendication 17, où la première longueur d'onde (λ1) est plus grande que la deuxième longueur d'onde (12).

26. Emetteur-récepteur selon la revendication 25, où la première longueur d'onde (λ1) est de 1310 nm, 1490 nm ou 1550 nm et la deuxième longueur d'onde (12) de 850 nm ou 1310 nm.

27. Emetteur-récepteur selon la revendication 17, où le substrat de support (21) est composé de saphir.

28. Emetteur-récepteur selon la revendication 17, où le composant d'émission est formé en tant que puce laser (22) et que le composant de réception est formé en tant que puce de photodiodes (24).

29. Emetteur-récepteur selon la revendication 17, où le composant d'émission est formé par une diode laser émettant verticalement.

30. Emetteur-récepteur selon la revendication 1, où un sous-ensemble comporte :
- un micromodule d'émission (370) qui comporte sur un premier élément de support (378) un composant laser (371) qui émet un rayon lumineux d'une première longueur d'onde,
- un micromodule de réception (380) qui comporte sur un deuxième élément de support (381) une photodiode (382) qui détecte un rayon lumineux d'une deuxième longueur d'onde, et
- un boîtier TO avec une plaque de fond (310) qui sert d'agencement pour le micromodule d'émission et le micromodule de réception, où
- le micromodule d'émission (370) et le micromodule de réception (380) sont disposés l'un derrière l'autre par rapport au rayon lumineux émis ou à détecter, et
- le premier élément de support (378) du micromodule d'émission (370) est transparent au rayon lumineux à détecter.

31. Emetteur-récepteur selon la revendication 30, où la plaque de fond (310) du boîtier TO présente un évidemment (311) qui sert de réceptacle pour le micromodule de réception (380) et que le micromodule d'émission (370) est agencé au-dessus de celui-ci sur la plaque de fond (310).
